# EUROPEAN PATENT APPLICATION

(11) **EP 4 647 740 A1**
(43) Date of publication of application: **12.11.2025**
(21) Application number: 25173489.3
(22) Date of filing: 30.04.2025
(51) Int. Cl.: G01N 1/36, B65G 1/04, G01N 35/04

(54) **SYSTEM AND PROCESS FOR THE STORAGE OF BLOCKS OF EMBEDDING MATERIAL CONTAINING HISTOLOGICAL SAMPLES**

(30) Priority: 07.05.2024 IT 202400010237
(71) Applicant: Inpeco SA, 6883 Novazzano (CH)
(72) Inventor: PEDRAZZINI, Gianandrea, CH-6883 Novazzano (CH); BELLINI, Marco, CH-6883 Novazzano (CH); ZUCCA, Alessandra, CH-6883 Novazzano (CH)
(74) Representative: Buzzi, Notaro & Antonielli d'Oulx S.p.A.

(57) **Abstract**

A system (1) for the storage of blocks (B) of embedding material containing histological samples, comprising a controlled atmosphere storage cell (2), wherein a plurality of compartments (12) is arranged to receive trays (13) each having an identification element. Each tray (13) carries a plurality of cassettes (14) each carrying a block (B) containing a histological sample. Each cassette (14) bears an identification element (48). The position of each cassette in a tray (13) is stored and the position of each tray (13) in the storage cell (2) is stored. The system comprises an input/output module (3) with a plurality of input stations (24) and at least one output station (60). The input stations (24) comprise at least a first input station (24) associated to an interface station (46) with an automatic transport system of cassettes (14). The output station (60) can be configured to interface with a structure (62) for manual loading or unloading of trays (13) carrying cassettes (14), or to cooperate with an autonomous mobile robot configured to support one or more trays (13) carrying cassettes (14).

## Description

### Field of the invention

The present invention relates to a system for the storage of blocks of embedding material containing histological samples, of the type comprising a plurality of cassettes, each configured to carry a block of embedding material containing a histological material sample, wherein each cassette bears an identification element that identifies the histological sample associated with the cassette, a storage cell, including a plurality of compartments configured to receive cassettes carrying respective blocks with histological samples, and an input/output module, for the input of cassettes carrying blocks with histological samples into the storage cell and for the output of cassettes carrying blocks with histological samples from the storage cell.

### Prior art

A storage system having the features above indicated, on which the preamble of the appended claim 1 is based, is described in the document EP 2 918 988 B1**.**

Another known solution, described in the document CN 110 065 758 B, provides for the direct handling of blocks of embedding material, without provision of cassettes for containing the blocks and with the use of storage cabinets that are movable along a horizontal direction.

In modern anatomical pathology laboratories, all successive steps which a histological sample undergoes are performed in automated stations linked together by automated transport systems. Automation of the entire process is crucial not only to achieve an increase in laboratory efficiency and productivity, but also and above all to minimize or completely reduce the manual intervention of operators on the samples, so as to avoid any kind of human error in sample handling. Obviously, in such automated systems, it is essential to ensure the traceability of each histological sample, which means providing an electronic control system which is able to identify and store data related to each histological sample, and which is also able to know at any time the location of a previously identified histological sample within the laboratory, especially within a specific processing station or along a sample transport line within the laboratory.

One of the operations that is performed in an anatomical pathology laboratory is the operation of embedding a histological sample in an embedding material (typically paraffin). This operation is performed after a surgical sample taken from a patient has undergone grossing, formalin fixation and a treatment in which the tissue sample is dehydrated in alcohol and then clarified with xylene, so as to transform the tissue itself from hydrophilic to hydrophobic, in order to proceed with a first impregnation in paraffin.

An automated workstation for performing the aforementioned embedding operation was described by the Applicant in the document WO 2022/249059 A1**.** Downstream of such a station are obtained blocks of embedding material including histological samples, wherein each block is carried by a cassette of plastic material, which bears an identification element identifying the histological sample associated with the cassette. The identification element may be, for example, an optical code, such as a QR code, containing a series of data related to the histological sample, such as data related to the patient from whom the histological sample originates and to the operations the histological sample must undergo.

The blocks leaving the automated embedding station are intended to be transferred to one or more microtomy stations, for the preparation of slides bearing sections of the histological sample. As already indicated, the different stations of a modern anatomical pathology laboratory are linked together by automated transport systems.

One transport system that has been proposed and used for some time by the Applicant is a pneumatic transport system, wherein histological samples travel inside carriers that are transferred at high speed within ducts between the various terminals of the line. An automated station for loading and unloading carriers is provided at each terminal of the pneumatic transport line. Such a station was the subject of the document EP 4 151 568 A1 by the Applicant.

In order to provide a fully automated system for the entire anatomical pathology process, it is necessary to provide a parking area ("buffer") between the embedding station and the microtomy station, in which blocks containing histological samples that cannot be immediately forwarded to the microtomy station can be temporarily stored.

The present invention has been designed in particular to meet this need, although it is nevertheless of general application as it could, for example, also be applied to a storage of histological samples subsequent to the operations which they undergo at the microtomy station.

The need for storage of blocks containing histological samples involves the solution to a series of problems:
- first of all, the storage of histological samples must be performed with full assurance on the proper preservation of the samples,
- moreover, a storage system intended to be integrated into an automated anatomical pathology laboratory must meet in the best possible way the requirements of a fast and reliable automated transfer of blocks containing histological samples in and out of the storage system,
- an additional need is for high flexibility of the system, such that it can be interfaced with different systems for handling the blocks containing the samples,
- finally, it is essential to ensure full traceability of each histological sample within the storage system, and in the steps wherein it is in transit in and out of the storage system.

### Object of the invention

It is therefore a main object of the present invention to realize a system for storing blocks of embedding material containing histological samples that optimally meets all the above requirements.

In particular, one object of the invention is to realize a storage system wherein the blocks of embedding material including histological samples can be moved in and out of the storage system in a fully automated way and without losing the traceability of the histological samples, that is the ability to identify each histological sample and to know the position wherein it is located at all times.

A further object of the invention is to realize the aforementioned purposes in a storage system configured to fit within a fully automated anatomical pathology system.

A further object of the invention is to realize a storage system that is configured to interface with automated transport systems of various types, including for example pneumatic transport systems, or transport systems that make use of autonomous mobile robots (AMRs), and which does not however exclude also the possibility that blocks with histological samples to be stored in the storage system can be inserted into the system or picked up from the system through manual operations.

Finally, a further object of the invention is to realize a storage system that has a relatively simple structure and low cost.

### Summary of the invention

**In** view of achieving one or more of the aforementioned objects, the invention relates to a system for the storage of blocks of embedding material containing histological samples, having the features indicated in the appended claim 1, and a storage process according to the appended claim 11.

Further advantageous features of preferred embodiments are indicated in the dependent claims.

### Brief description of the figures

Features and advantages of preferred embodiments of the invention will result from the following description with reference to the appended drawings, provided purely by way of non-limiting example, wherein:
- Figure 1 is a perspective view of a preferred embodiment of the storage system of the invention,
- Figure 2 is a front view of the storage system of Figure 1,
- Figure 3 is an enlarged scale plan view of the input/output module forming part of the system of Figure 1,
- Figure 4 is an enlarged scale perspective view of the detail of an arrival/departure station of a pneumatic transport system, associated with the input/output module of Figure 3,
- Figure 5 is an enlarged scale perspective view of a detail of the input/output module of the system of Figures 1-3, illustrating a step in the operation of loading blocks containing histological samples into the input/output module of the system according to the invention,
- Figure 6 is a side view of the manipulator device associated with the input/output module of the storage system according to the invention,
- Figure 7 is an enlarged scale perspective view of the operating head of the manipulator device of Figure 6,
- Figure 8 illustrates a support used in a station that serves as an interface between an input station of the input/output module and one or more arrival/departure stations of a pneumatic transport system transporting cassettes carrying blocks containing histological samples,
- Figure 9 is a perspective view of the support of Figure 8, with transport containers placed on it,
- Figure 10 shows the same assembly as in Figure 9 with the transport containers filled with cassettes,
- Figure 11 is a perspective view showing a condition wherein an input station of the input/output module has received a tray which has been filled with cassettes,
- Figure 12 is a further enlarged scale perspective view of the operating head of the manipulator device associated with the input/output module, showing the step wherein an optical reader with which the operating head is provided detects an optical code borne by a cassette grasped by the operating head,
- Figure 13 shows a tray of the type intended to be placed within the storage cell of the storage system according to the invention, filled with cassettes to which are associated just as many blocks of embedding material containing histological samples,
- Figure 14 is a partial perspective view of the internal structure of the storage cell, showing the manipulator device associated with the storage cell,
- Figure 15 is an enlarged scale perspective view illustrating the detail of a support carried by the operating head of the manipulator device associated with the storage cell,
- Figure 16 is a perspective view illustrating the detail of a location for manual loading or unloading of trays in the input/output module of the storage system according to the invention,
- Figure 17 is a perspective view of the detail of the drawer structure arranged at the aforementioned location for manual loading or unloading of trays,
- Figure 18 is a further perspective view showing the location of Figure 16 with a further interface station adjacent to it, for manual loading of trays of a type different from the standard type intended to be received within the storage cell,
- Figure 19 is a further partial perspective view of the storage system according to the invention showing an input/output module with a drawer structure arranged for manual transport of a stack of trays entering, or leaving, the storage system,
- Figure 20 is a further perspective view of the storage system according to the invention showing the internal structure of the storage cell with supports defining the compartments intended to receive the trays carrying cassettes with associated blocks containing histological samples,
- Figures 21, 22, 23 are further perspective views of the drawer structure of Figure 19.
- Figure 24 is a further perspective view of the operating head of the manipulator device associated with the input/output module of the storage system according to the invention, in a variation comprising a cassette-detaching device that prevents that a cassette grasped by a gripper of the operating head remains adherent to the gripper at the time the gripper places the cassette in a tray,
- Figures 25, 26 illustrate two successive steps of the operation of placement of a cassette in a tray, wherein the cassette-detaching device prevents the cassette from remaining adherent to the gripper of the operating head,
- Figure 27 shows a step wherein the gripper of the operating head grasps and picks up a cassette, without the cassette-detaching device obstructing that operation,
- Figure 28 is a perspective view of a detail of the upper level of the bench 20, in a variation wherein, next to the interface station 46, it is provided a station for cleaning the jaws of the gripper of the operating head of the manipulator device associated with the input/output module of the storage system according to the invention, and

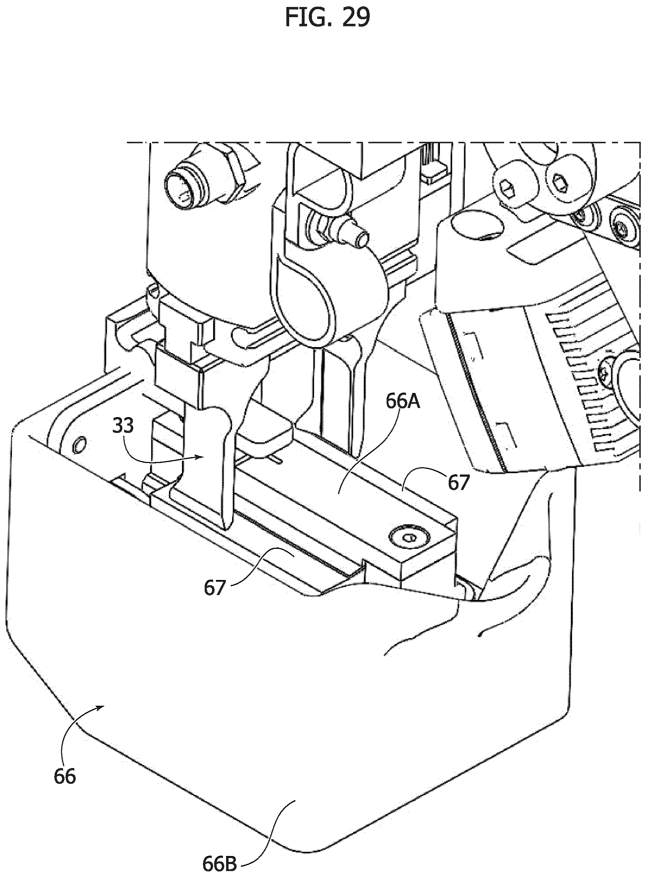

- Figure 29 shows the gripper of the operating head of the aforementioned manipulator device in the cleaning station, during the execution of a cleaning operation of the gripper jaws.

### Detailed description of the invention

The drawings show an embodiment of a storage system of blocks of embedding material containing histological samples.

In the example illustrated, the storage system is intended to be operationally interposed between one or more embedding stations, wherein histological samples are embedded in blocks of embedding material, i.e. paraffin, and one or more microtomy stations, wherein blocks containing histological samples are intended to be cut for slide preparation. The storage system herein illustrated is used for a temporary storage of blocks that cannot be directly sent to the microtomy stations and/or of blocks that, for any reason, from the microtomy stations need to be temporarily stored again before undergoing further operations.

The storage system, indicated as a whole by reference 1, comprises a storage cell 2 and an input/output module 3.

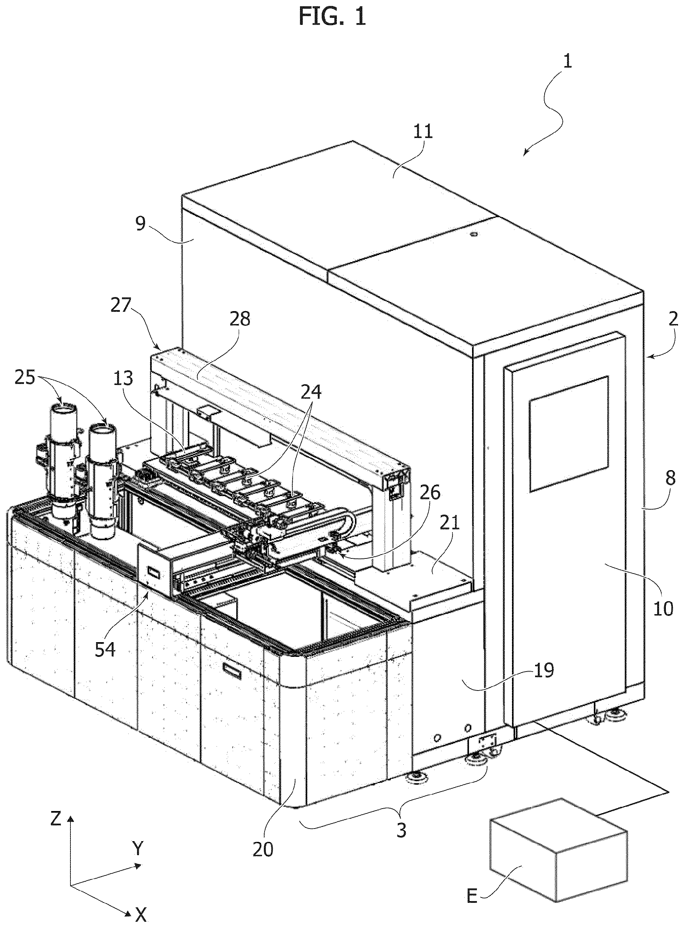

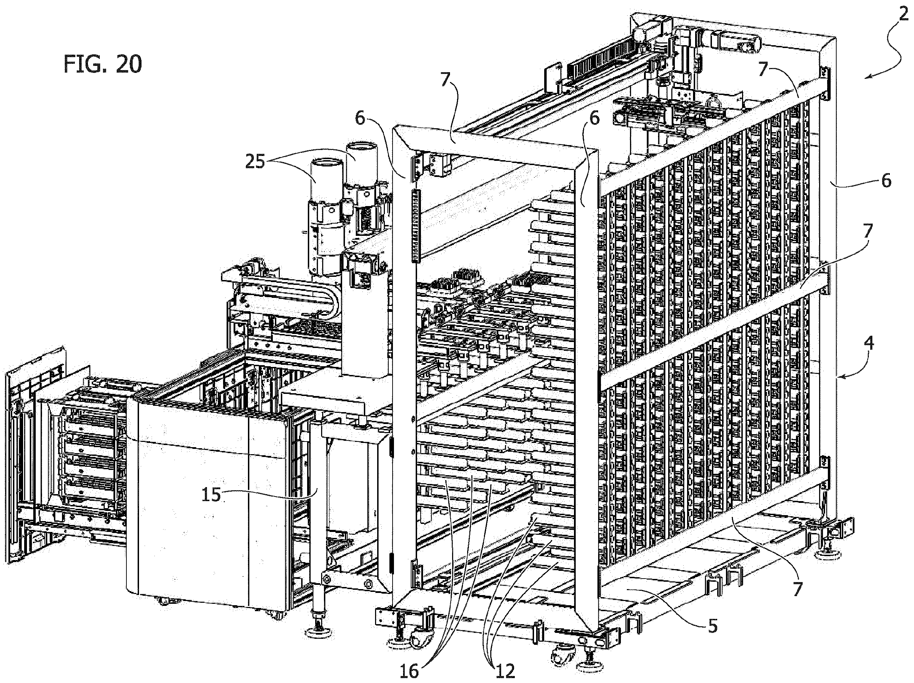

The storage cell 2 comprises a support frame 4 (visible in figure 20) including a base 5 and vertical columns 6 connected to each other by crosspieces 7. Connected to the members of the frame 4 are a back wall 8 (figure 1), a front wall 9, two side walls 10 and an upper wall 11 that define within them a closed chamber that is maintained at a controlled atmosphere by a climate control device, not visible in the drawings. The atmosphere inside the storage cell 2 is maintained at a temperature not exceeding 27 °C and a relative humidity not exceeding 70%.

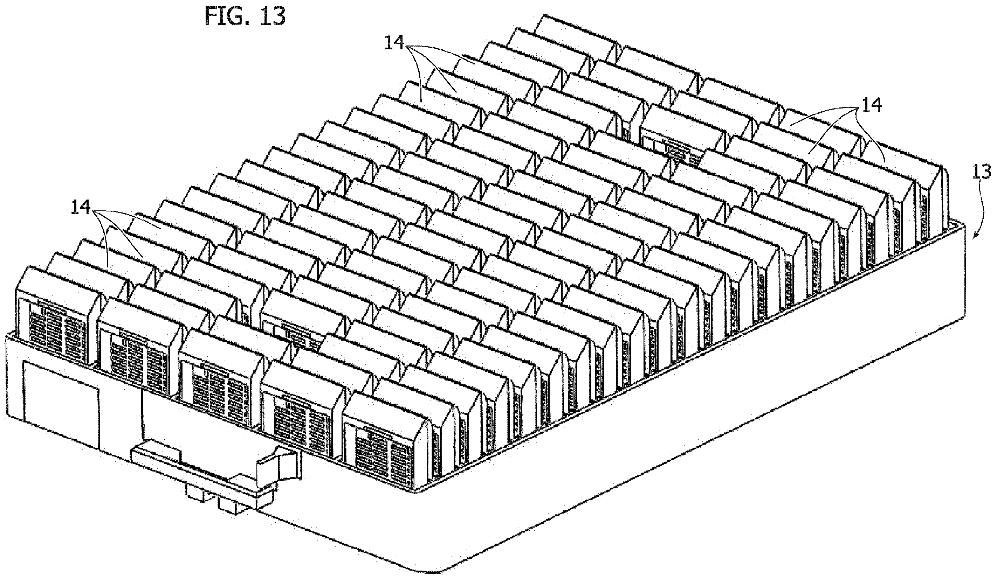

The rear wall 8 of storage cell 2 supports cantilevered a plurality of overlapping and spaced rows of shelves defining a plurality of compartments 12 (figure 20) intended to hold trays 13 of the type shown in figure 13, each containing multiple side-by-side rows of cassettes 14 of plastic material to which blocks of embedding material containing histological samples are associated.

In the example illustrated, the shelves are arranged on a plurality of overlapping and spaced levels. At each level, each pair of shelves is intended to support the two sides of a tray 13 of the type shown in figure 13. The shelves are sized and positioned relatively to each other in a suitable way to define a compartment 12 wherein a tray 13 can be received. Trays 13 intended to be received in the storage cell 2 are then configured with predetermined dimensions.

In a practical embodiment, storage cell 2 has 225 compartments 12 arranged to receive just as many trays 13. Each tray 13 is arranged to receive, in such an embodiment, a total of 98 cassettes.

As will also become apparent below, trays 13 are configured to receive both cassettes 14 of a type normally used in the anatomical pathology systems developed by the Applicant, and also cassettes of a different type. In general, therefore, cassettes carrying blocks of embedding material containing histological samples can be of any known type.

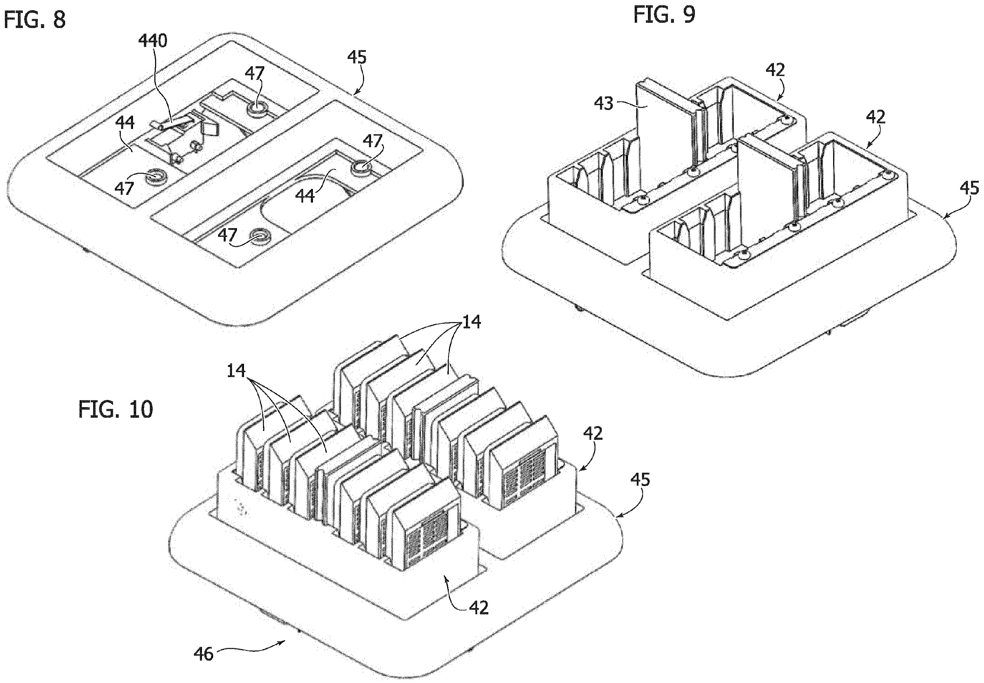

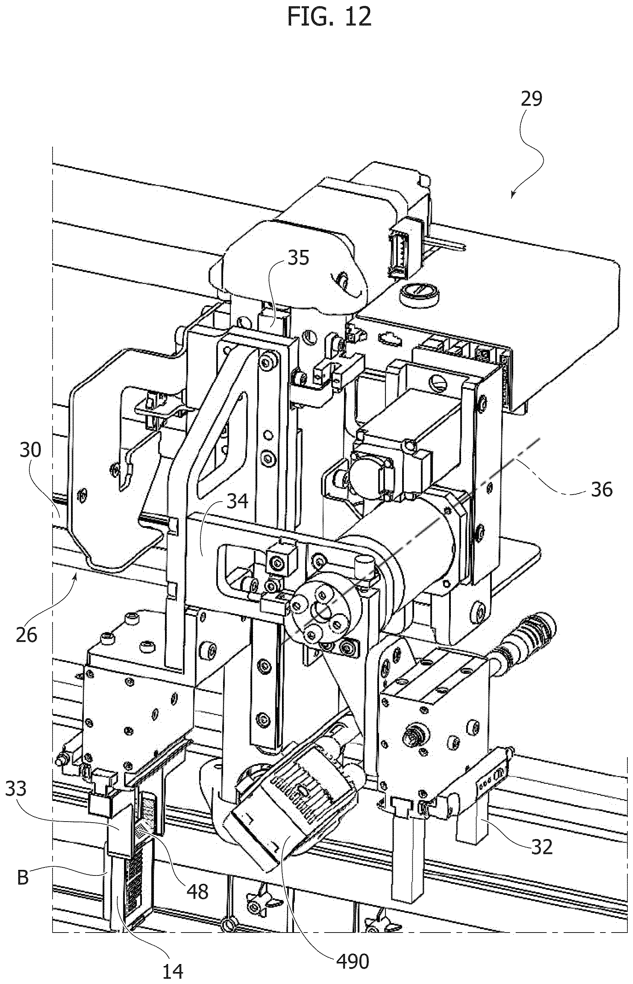

Cassettes 14 of the type normally used in the automated systems of the Applicant are visible in figure 10. Cassettes of this known type are, for example, described and illustrated in the document WO 2022/249059 A1 of the Applicant. Blocks B of embedding material (see figure 12) coming from an embedding station arrive in a condition wherein each block B is closely associated with a cassette 14.

An essential feature for the purposes of the present invention is that the cassette 14 bears an identification element 48 of the histological sample associated with it. In the case of the systems developed by the Applicant, the identification element 48 is an optical code (figure 12), such as a QR code, which is generated at the initial step of the anatomical pathology process when a specific histological sample is placed in a cassette, even before the sample is embedded within the embedding material. The optical code is created by storing in it data related to the histological sample, containing for example the name of the patient from whom the histological sample has been taken, and additional data such as for example the operations which the histological sample must undergo.

Referring specifically to figure 20, the input/output module 3 has a frame 15 within which additional shelves 16 are arranged that define in pairs further storage compartments for as many trays 13.

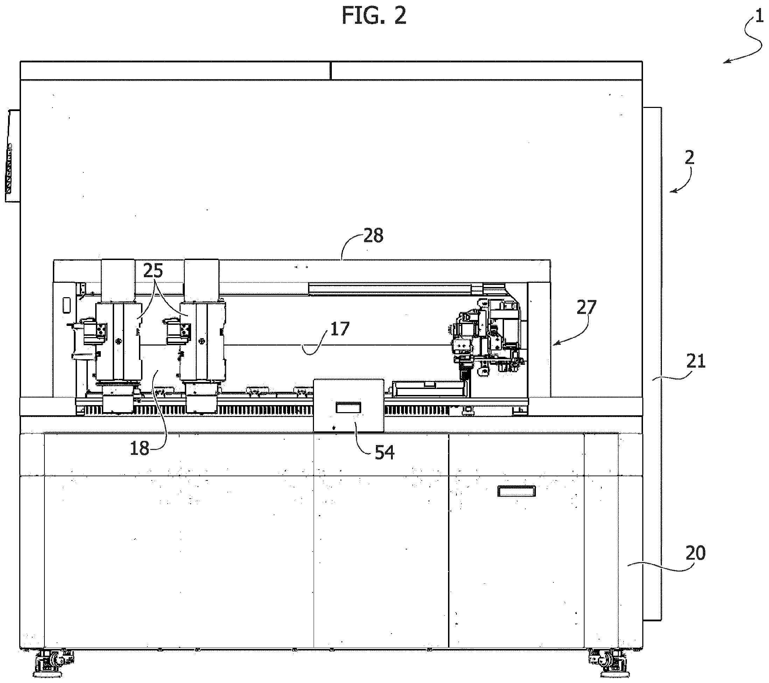

With reference to figures 1, 2, the front wall 9 of the storage cell 2 has a communication opening 17 that is closed by a shutter 18. The shutter 18 can be moved between a lowered condition (illustrated in figures 1, 2) and a position which is raised by means of a fluid cylinder (not illustrated).

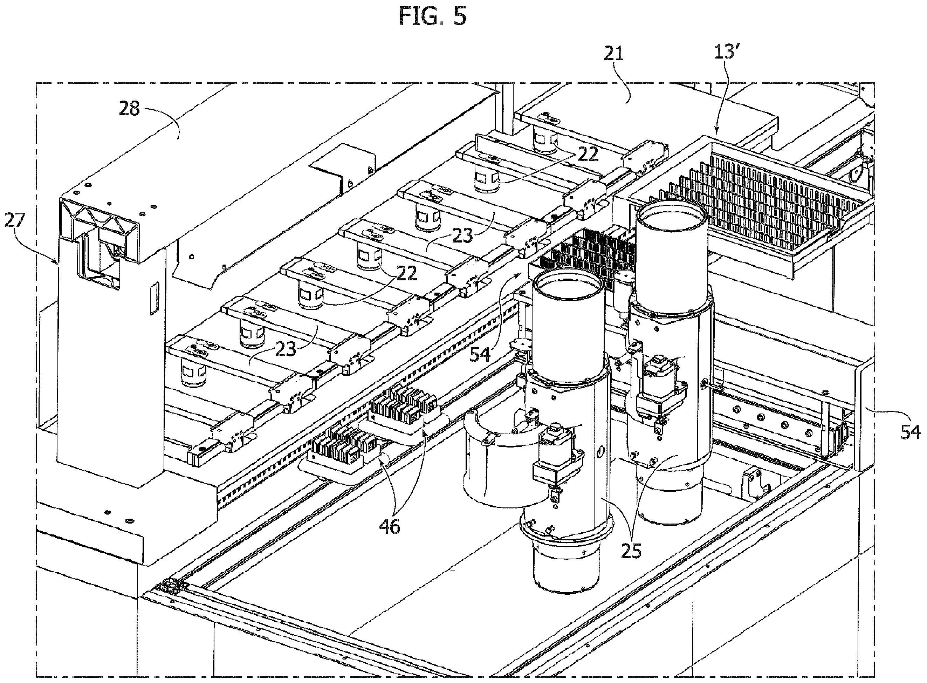

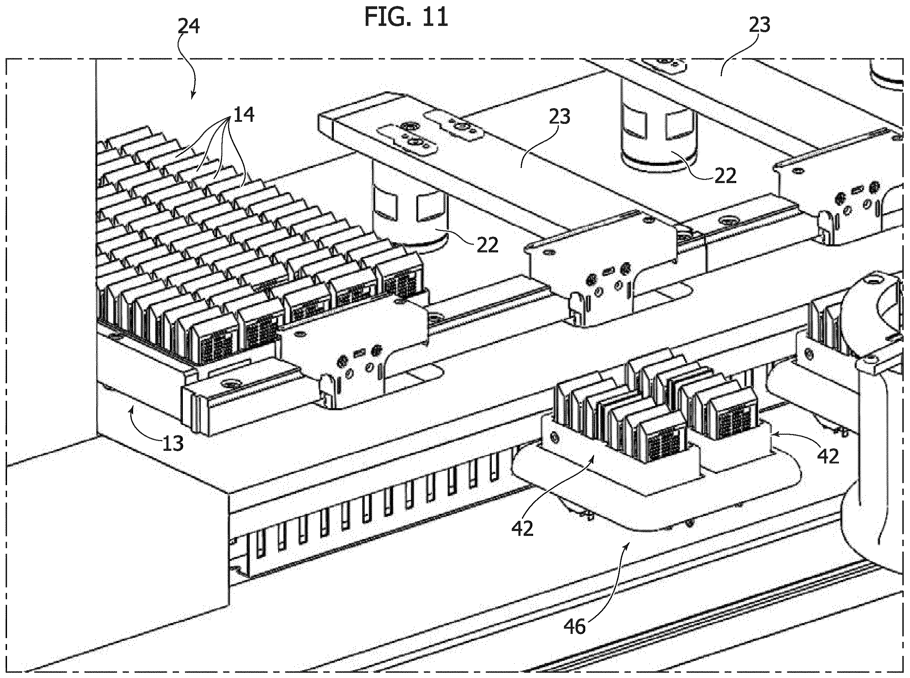

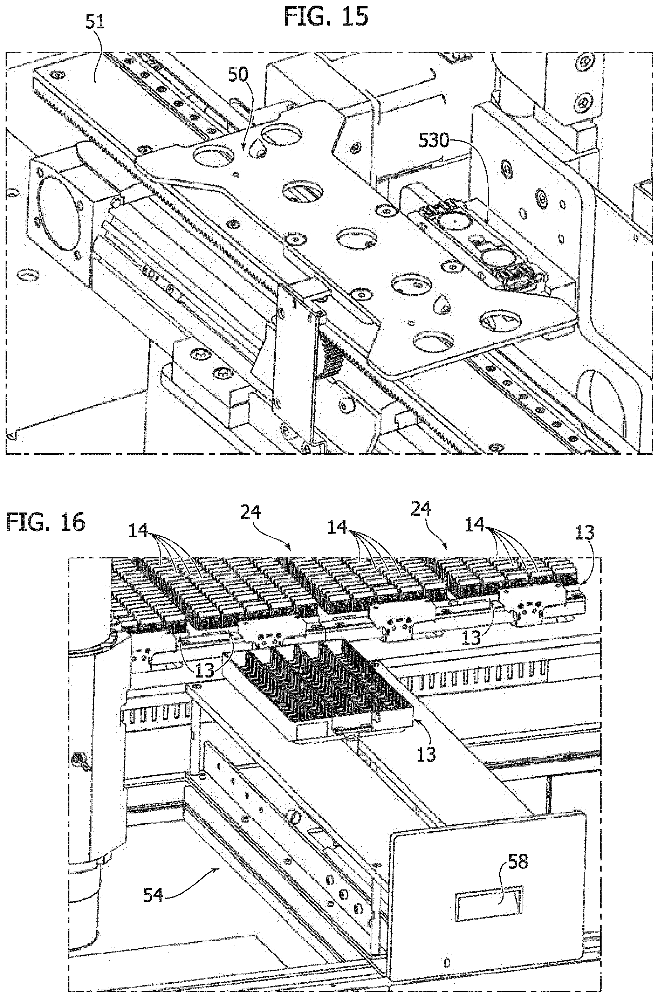

With reference to figures 1-3 and 5, the input/output module 3 comprises a first bench 19 adjacent to the front wall 9 of the storage cell 2 and a second bench 20 located in front of it. With reference in particular to figure 5, the first bench 19 has an upper level 21 which supports in a slightly elevated position, by means of supports 22, a plurality of horizontal plates 23 parallel to each other and spaced, so that each pair of plates 23 can support a tray 13 on its sides, keeping it in a slightly elevated position relative to the level 21. Each pair of plates 23 thus defines an input station 24 of the module 3, where a tray 13 to be introduced inside storage cell 2 can be placed, once the tray 13 has been filled with cassettes 14. Figure 16 shows a condition wherein a plurality of input stations 24 have already received respective trays 13 filled with cassettes 14. Figure 11 shows a condition wherein an input station 24 has received a tray 13 that has been filled with cassettes 14, while adjacent input stations 24 are empty.

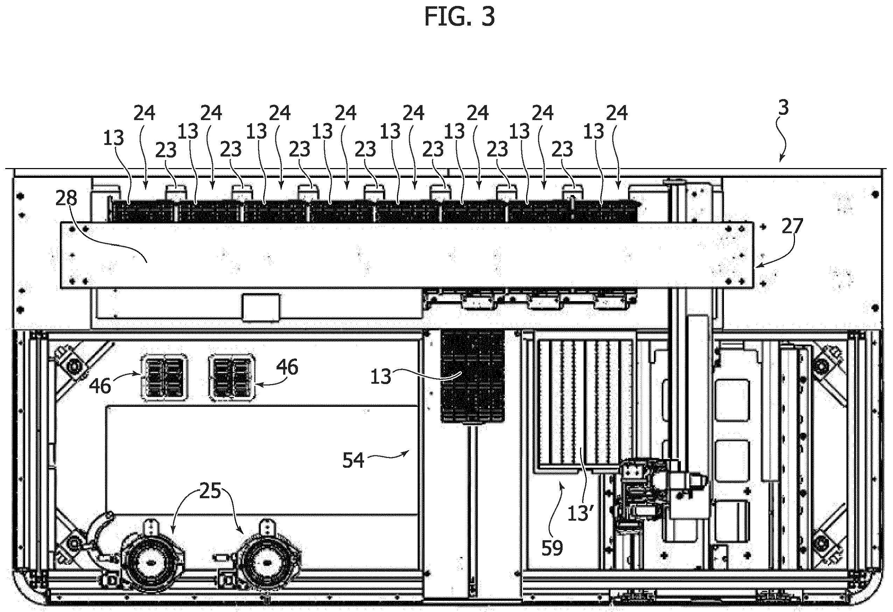

With reference to the plan view of figure 3, in the example shown herein, the three leftmost stations defined by plates 23 constitute three input stations 24 for just as many trays 13 intended to be filled with cassettes 14 coming from two arrival/departure stations 25 of pneumatic transport lines arranged in the anatomical pathology laboratory.

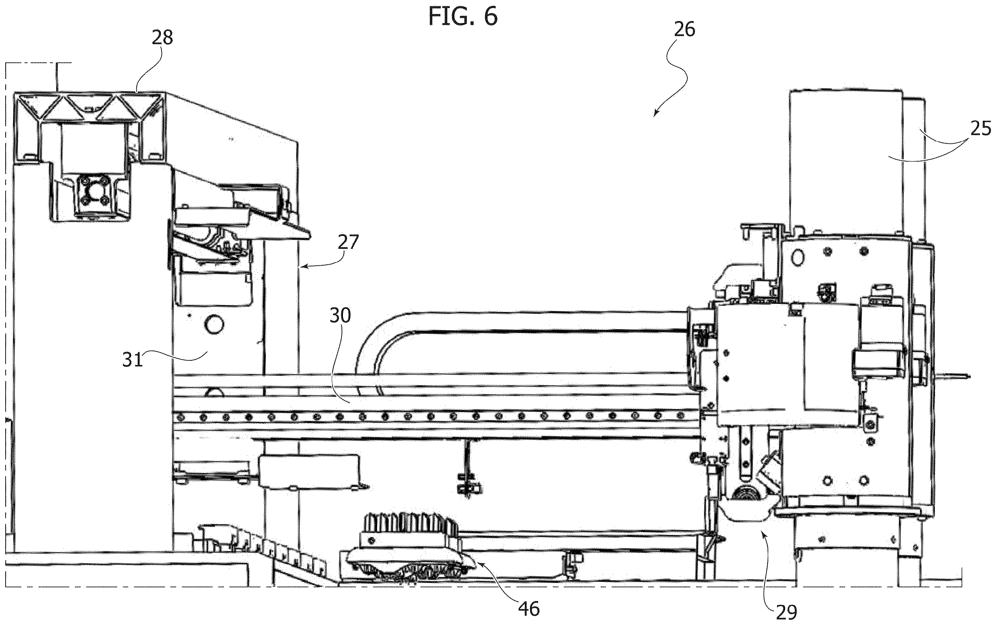

Cassettes 14 coming from the arrival/departure stations 25 of the pneumatic transport lines, carrying respective blocks B containing histological samples, are transferred to trays 13 arranged at input stations 24, in the way that will be described in detail below, by a manipulator device 26 visible in figures 1 and 6.

Manipulator device 26 is carried by a gantry structure 27 mounted on the upper level 21 of the bench 19. The gantry structure 27 includes two columns carrying an overhead crosspiece 28 extending in the longitudinal direction indicated by X in figure 1.

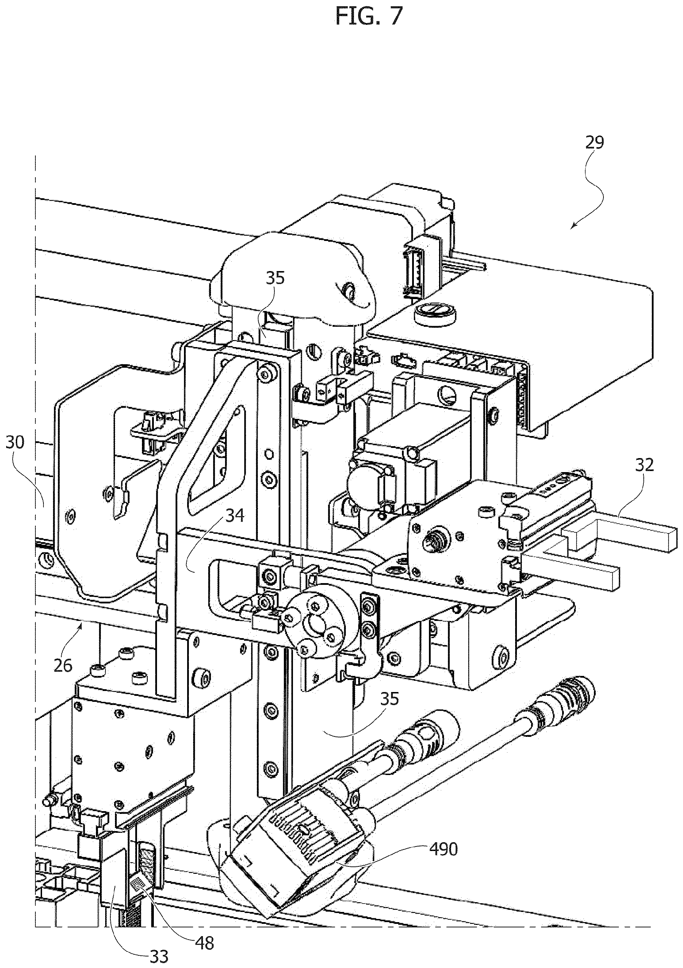

In the illustrated example, the manipulator device 26 includes an operating head 29, better visible in figures 7 and 12, which is movable in the Y-direction (indicated in figure 1) on a rail 30, that cantilevers out from a carriage 31 movably supported along the X-direction by the crosspiece 28 of the gantry structure 27 (see figure 6).

With reference in particular to figures 7 and 12, the operating head 29 carries a first gripper 32 and a second gripper 33 whose function will be illustrated hereafter. Both grippers 32, 33 are carried by a structure 34 movable in the vertical Z-direction (still indicated in figure 1) along a rail 35 carried by the structure of the head 29, which is on its turn mounted sliding in the Y-direction on the rail 30. In addition, the first gripper 32 is carried by the structure 34 with the possibility of rotation about a horizontal axis parallel to the X-direction, indicated by 36 in figure 12. The construction details of the manipulator device 26 are not further described or illustrated here, since such a manipulator device can be made in any known way. Even in a per se known way, the movements of the moving parts of the manipulator device 26 along the X, Y and Z axes are controlled through servomotors by an electronic controller E of the storage system 1, schematically illustrated in figure 1.

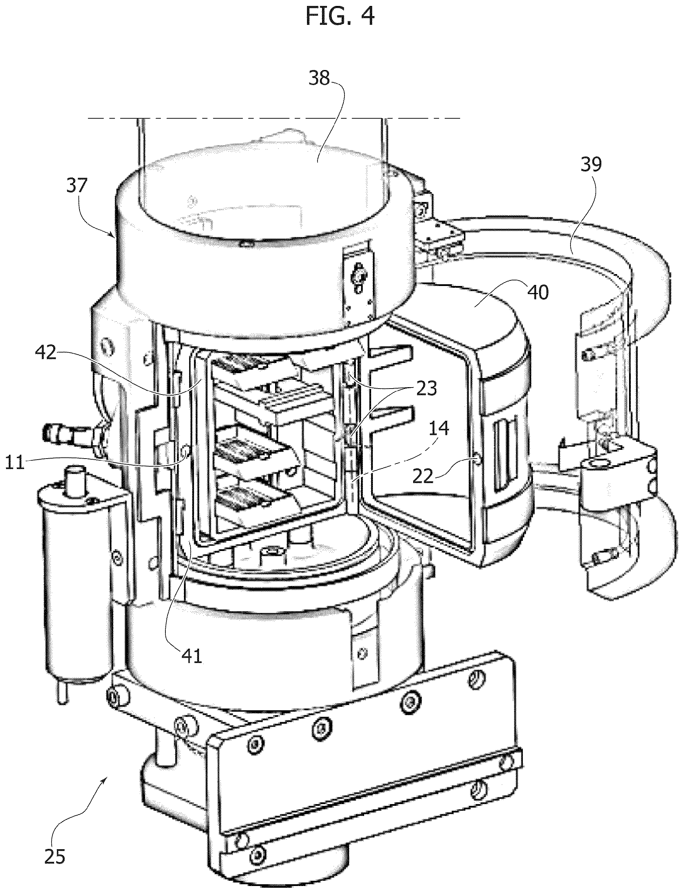

Figure 4 shows the detail of an arrival/departure station 25 arranged adjacent to the input/output module 3. The station 25 can be made in any known way. In the practical example shown here, the station 25 is realized in accordance with the teachings of the document EP 4 151 568 A1 of the same Applicant. With reference to figure 4, the station 25 includes a cylindrical body 37 connected to one end of a tubular duct 38 for pneumatic transport of carriers 41 containing the material to be transported. Figure 4 shows the station with its own door 39 in the open condition. When the door 39 is open, it also causes the opening of a door 40 of a carrier 41 configured to travel in the duct 38 of the pneumatic transport system. The carrier 41 contains inside a transport container 42 which is filled with cassettes 14 each carrying respective embedding blocks containing histological samples.

Each container 42 has a protruding central appendage 43 (see, for example, figure 9) which allows the operating head 29 of the manipulator device 26 to grasp a transport container 42. For this purpose, when a carrier 41 reaches the arrival/departure station 25 of the pneumatic transport system, the doors 39, 40 are automatically opened and the operating head of the manipulator device 26 is used to pick up, by means of the gripper 32, the transport container 42. To this end, the operating head 29 moves along the X, Y and Z directions to bring itself at station 25, and the gripper 32 is rotated about the axis 36 in order to grasp the appendage 43 of the transport container 42.

Once the transport container 42 has been picked up, the manipulator device 26, by means of the gripper 32 of the operating head 29, places the transport container 42 in a housing 44 of a holder 45 (see figures 8-10) arranged on an upper level of the bench 20 and constituting an interface station 46 between the input stations 24 of the input/output module 3 and the arrival/departure stations 25 of the pneumatic conveying lines. With reference in particular to figure 3, two interface stations 46, each with a holder 45, are provided in the illustrated example. Each holder 45, again in the illustrated example, has two housings 44 configured to receive just as many transport containers 42, as shown in figures 8-10.

In the illustrated example, each holder 45 has a body of plastic material. On the bottom wall of each housing 44 are arranged magnets 47 configured to cooperate with corresponding magnets arranged on the bottom wall of the transport containers 42, so as to hold the transport container 42 in its housing during the subsequent step wherein the manipulator device 26 transfers the cassettes 14 carried by each container 42 (figure 10) into the tray 13 which is in a waiting position at one of the input stations 24. At the same time, the magnetic attraction force which holds each transport container 42 in the housing 44 of the holder 45 does not, however, prevent the manipulator device 26 from removing a transport container 42 from its housing, after it has been emptied, in order to return it within one of the arrival/departure stations 25 of the pneumatic transport system. Each housing 44 is also associated with a sensor 440 (for example a micro-switch) able to detect the presence/absence of a container 42 in the housing 44.

Whenever a transport container 42 filled with cassettes 14 has been picked up from an arrival/departure station 25 of the pneumatic transport system, by means of the gripper 32 of the manipulator device 26, it is placed in a housing 44 of a holder 45 in the interface station 46. At this time, the same manipulator device 26, through its gripper 33 (see figure 12) picks up, one by one, the cassettes 14. As previously described, and as visible in figure 12, a block B of embedding material that includes a histological sample adheres to each cassette 14. As also previously described, each cassette 14 has a body of plastic material bearing an identification element 48 (figures 7 and 12) of the histological sample associated with it. In the example visible in figures 7 and 12, the identification element 48 is a QR code present on an end wall of the cassette 14.

Still with reference to figure 12, in the illustrated embodiment, an optical code reader device 490 is also associated with the operating head 29 of the manipulator device 26. Therefore, whenever the manipulator device 26 picks up a cassette 14 from a transport container 42 that has arrived at interface station 46, the identification element 48 of the cassette 14 that has been picked up is read by the optical code reader 490 and the data associated with the identification element 48 are stored in a memory associated with the electronic controller E of the storage system 1.

After a cassette 14 has been picked up by the manipulator device 26, by removing it from a transport container 42 located at the interface station 46, and after the identification element 48 of the picked up cassette 14 has been detected by the optical code reader 490, the manipulator device 26 places the cassette in a tray 13 which is in a waiting position at an input station 24 (see for example figure 11).

Preferably, however, before placing the cassette 14 into the tray 13, the manipulator device 26 brings the cassette 14 in front of a camera or video camera (not shown) brought by the stationary structure of the input/output module 3, to allow the electronic controller E to receive and store, in a memory associated with it, image data related to the histological sample associated with the cassette. The histological sample image can then be used to detect configuration and size of the histological sample, in the subsequent processes to which the sample is subjected.

Whenever a transport container 42 has been emptied, the manipulator device 26 itself, through the gripper 32, can provide for bringing the empty transport container 42 back to an arrival/departure station 25 for its return, via the pneumatic transport system, to a station where it will be loaded again with other cassettes 14.

Once a tray 13, which is in a waiting position at an input station 24, has been completely filled with cassettes 14 by the manipulator device 26, the tray 13 filled with cassettes 14 can be transferred to a specific compartment 12 of the storage cell 2.

The handling of transport tray 13 from the input station 24 to a compartment of the storage cell 2 is carried out by a second manipulator device 49 which is supported by the frame 4 of the storage cell 2.

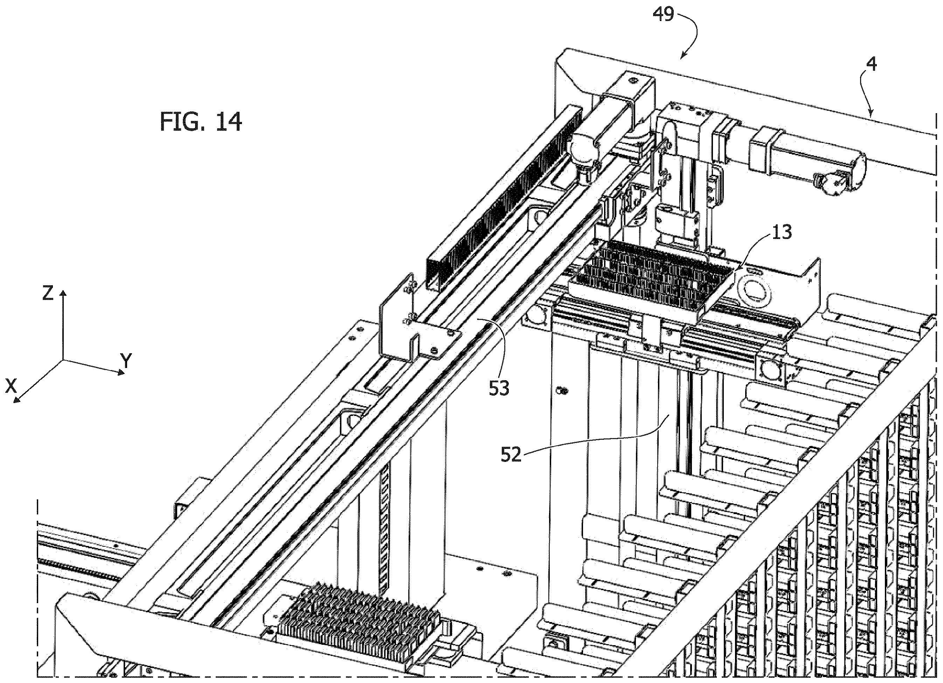

With reference to figures 14 and 15, the manipulator device 49 has an operating head movable in the three orthogonal directions X, Y, Z (figure 14) carrying a plate support 50 (figure 15) arranged to pick up and transport a tray 13. The head carrying the plate support 50 is movable in the Y-direction on a rail 51 supported by a movable slide in the vertical Z-direction on a vertical guide column 52 (figure 14). Column 52 is in turn movably guided at its ends in the X-direction on an upper crosspiece 53 carried by the frame 4 and on a lower crosspiece (not visible in the drawings) also carried by the frame 4.

Also with regard to the manipulator device 49, the configuration and construction details of such a manipulator device can of course be realized in any known way. For this reason, the construction details of the manipulator device 49 in the embodiment illustrated herein are not further described. The same applies to the systems for driving the movement of the manipulator device 49 in the three axes X, Y, Z. Obviously, even in this case, the movements along the three axes are controlled by electric servomotors operated by the electronic controller E of the storage system.

In operation, whenever a tray 13 which is in a waiting position at an input station 24 of the input/output module 3 is completely filled with cassettes 14 carrying respective blocks B containing histological samples, the shutter 18 (figure 2) for the access to the inner chamber of the storage cell 2 is lifted, and the manipulator device 49 brings the plate support 50 below the tray 13, into the space available between the plates 23 supporting it, and then lifts up so as to pick up the tray 13. The manipulator device 49 is then operated until it brings the tray 13 thus picked up into a specific compartment of the storage cell 2.

With reference to figure 15, adjacent to the plate carrier 50 is provided a detecting device 530 capable to detect an identification element associated with the tray 13, so that the electronic controller E can identify and store the tray 13 being handled by the manipulator device.

In the preferred embodiment, the detecting device 530 is an antenna connected to the electronic controller E that can detect an RFID tag carried by each tray 13.

Thanks to the above features, the electronic controller E of the storage system is able to continuously track the histological sample associated with each cassette 14. At the step wherein the first manipulator device 26 provides for picking up a specific cassette 14 from a transport container 42 and placing it in a tray 13, it is able to both identify the cassette 14 and store the location within the tray 13 where the specific cassette 14 is located. Moreover, thanks to the detection of the identification element associated with each tray 13, the electronic controller E is able to store the tray 13 wherein a specific cassette 14 is located and is also able to store, once the manipulator device 49 has brought the tray 13 into a specific compartment of the storage cell 2, the compartment 12 of the storage cell 2 wherein a specific tray 13 carrying a specific cassette 14 is located.

In the storage system according to the invention, the electronic controller E is therefore able to know at any time the position in the storage cell 2 of a specific histological sample, the position being defined by the compartment 12 wherein the tray 13 carrying the cassette 14 carrying a specific histological sample is placed and by the position within that specific tray 13 of the cassette 14 to which the histological sample of interest is associated.

The electronic controller E will therefore always be able to locate a specific histological sample stored in storage cell 2 and, if necessary, route it towards an output station of the storage cell 2, in the way that will be described in detail below.

Naturally, in this description and in the claims that follow, the expression "electronic controller" is intended to encompass both the case of a single electronic control unit and the case of an electronic control system with a distributed configuration, including multiple electronic control units associated with the various devices, sensors, and actuators provided in the storage system.

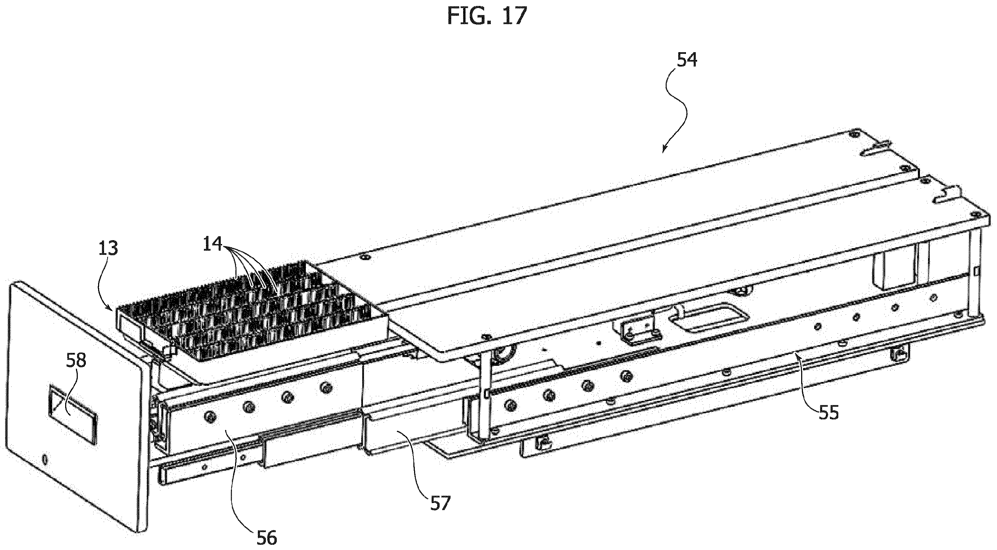

According to a further feature of the invention, the input/output module 3 comprises at least one input station 24 which is interfaced with a location 54 (figures 16, 17) for the manual load or unload of trays 13 filled with cassettes 14 carrying respective blocks containing histological samples.

In the embodiment shown herein, the location 54 has a drawer structure, with a support structure 55 (figure 17) connected to the frame of the bench 19 of the input/output module 3, and a slide 56 mounted sliding on rails 57 of the support structure 55 and having an upper surface arranged to receive thereon a tray 13 filled with cassettes 14. Associated with the slide 56 is a handle 58 that an operator can use to move the slide 56 between an extracted position, wherein the operator can easily load or unload a tray 13, and a forward position wherein the tray 13 is adjacent to an input station 24.

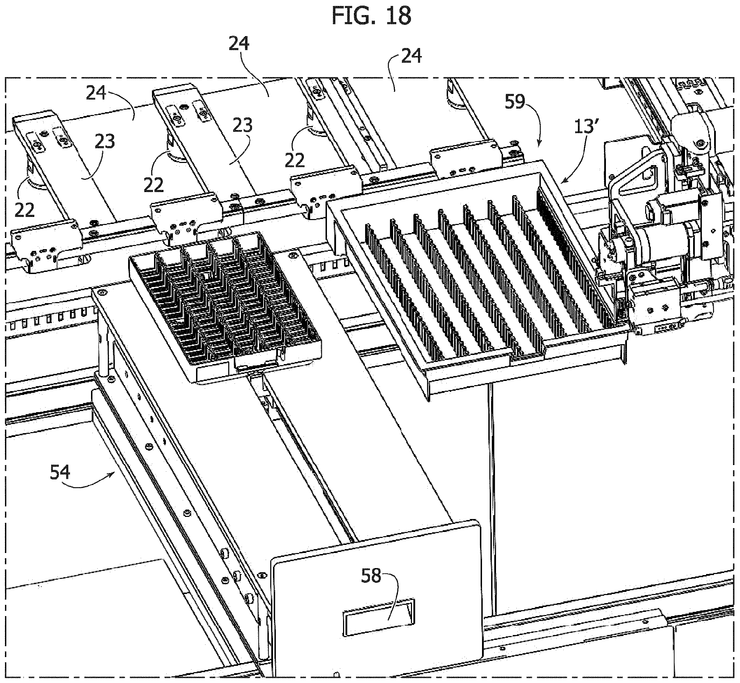

In the preferred embodiment, at least one additional interface station 59 is set up adjacent to further input stations 24 (see, for example, figure 18), where an operator can place a tray 13' full of cassettes (not illustrated in figure 18) which is of a different type, particularly in terms of size, than the normally used type of tray arranged to be stored in the storage cell 2.

The cassettes arranged in the tray 13' may also be different from a normally used type of cassette provided for trays 13. Once the operator has placed a tray 13' full of cassettes in the interface station 59, the manipulator device 26 can provide for transferring each cassette from the tray 13' to a normally used type of tray 13 which is in a waiting position at an input station 24.

Obviously, even in this case it is necessary that each cassette bears an identification element, specifically an optical code which can be detected by the optical code reader 490 with which the manipulator device 26 is provided, so that each cassette can be identified and stored, in order to be then placed in an identified and stored location of a tray 13.

The input/output module 3 also includes an output station 60 for the output of trays 13 carrying cassettes 14 with blocks containing histological samples to be transferred to further stations of the anatomical pathology laboratory, typically microtomy stations.

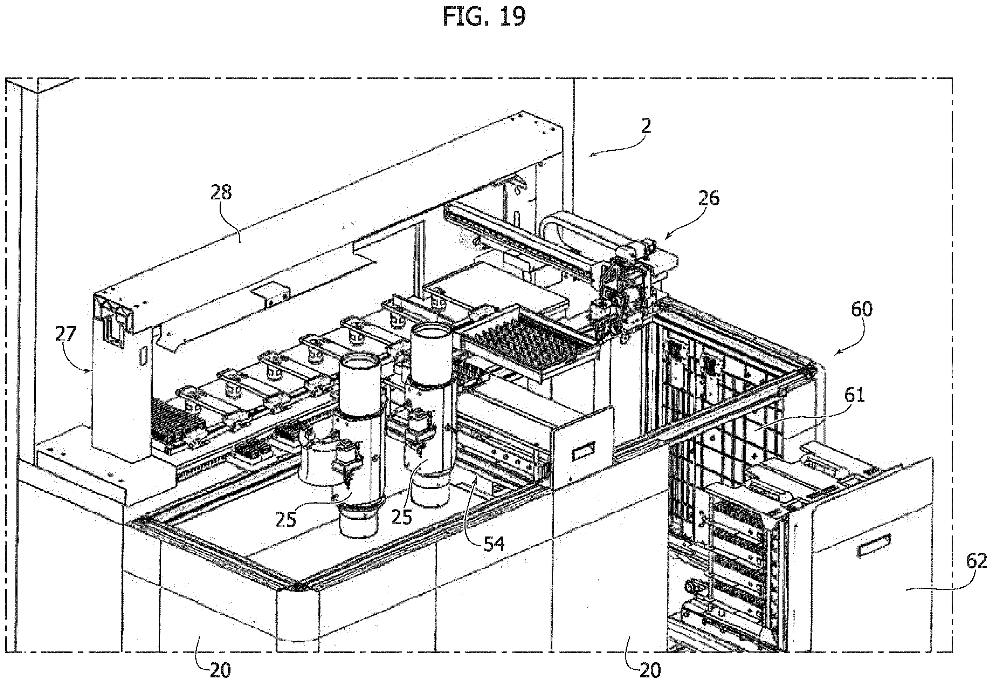

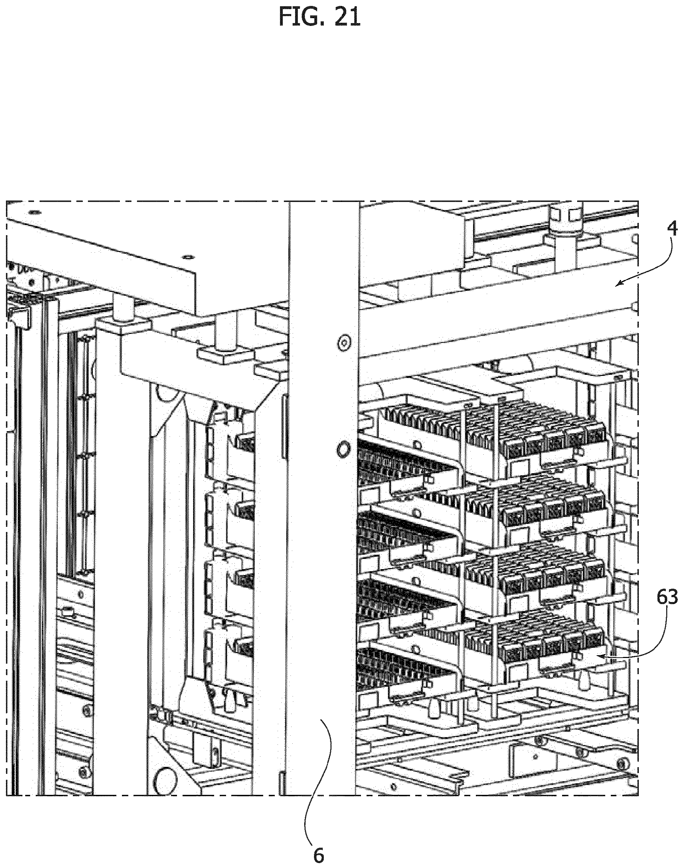

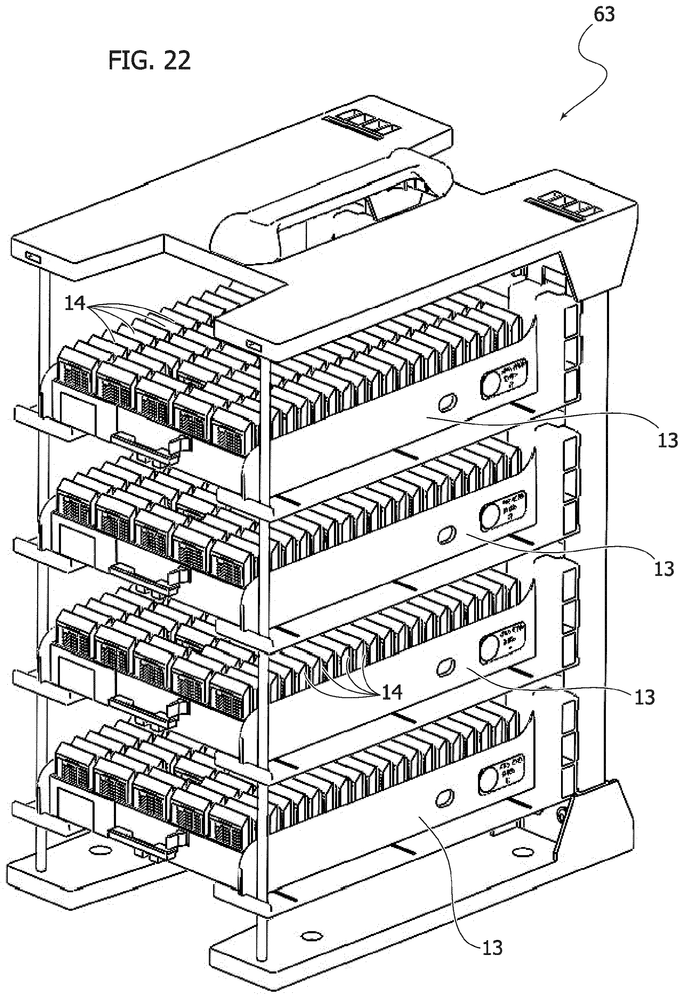

In the embodiment illustrated in figures 19-23, the output station 60 is provided in a front compartment 61 of the bench 20 of the input/output module 3.

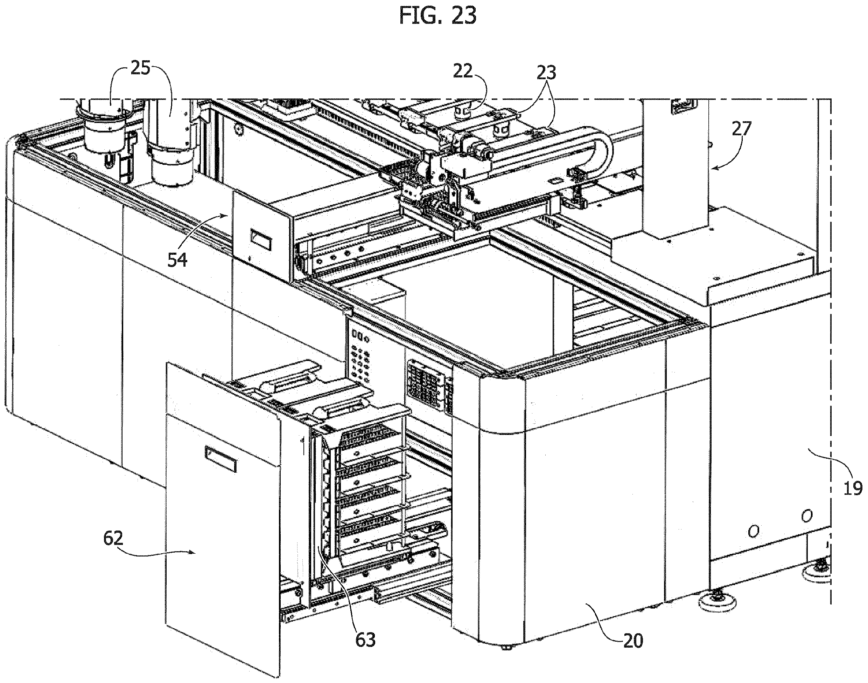

In the illustrated example, the compartment 61 is arranged to accommodate a drawer structure 62, preferably provided with a manually operated carriage and bearing a support structure 63 (figure 23) which supports on a plurality of vertically overlapping and spaced apart planes a plurality of trays 13 carrying cassettes 14 with the associated blocks containing histological samples.

When the drawer structure 62 is received within the compartment 61, with the planes of the support structure 63 still empty, the electronic controller E of the storage system can control the manipulator device 49 to successively pick up specific trays 13 in specific compartments of the storage cell 2 and bring them at one of the planes of the support structure 63, so as to place each picked up tray 13 in the support structure 63. When the support structure 63 has received all the trays 13 which must be routed to the output of the storage system, the operator can remove the drawer structure 62 from the compartment 61 and route it to further stations of the laboratory, using it as a hand carriage.

Obviously, the drawer structure 62 can also be used for the input of a plurality of trays 13 filled with cassettes 14 within the storage cell.

In this case, once the drawer structure 62 has been introduced into the compartment 61, the manipulator device 49 can pick up each tray 13 from the support structure 63 and bring it directly into a compartment 12 of the storage cell, if the electronic controller E has already acquired an information about the location of each identified cassette within each tray. Otherwise, the tray 13 carrying the cassettes can be temporarily placed at an input station 24, and the cassettes 14 can be picked up one by one by the manipulator device 26 in order to detect the optical code of each cassette and store the location of each cassette 14 within the tray 13, before transferring the tray 13 to a compartment 12 of the storage cell 2 by means of the manipulator device 49.

Rather than a manual drawer structure 62, a support structure of the type similar to the support structure 63 shown in figure 23 can be expected to form the superstructure of an autonomous mobile robot (AMR), which is controlled by an electronic control system of the anatomical pathology laboratory to position itself near the storage system 1 whenever it is necessary to pick up trays 13 outgoing from the storage system or unload ingoing trays 13.

As above indicated, both the compartments 12 defined by the shelves arranged within the storage cell 2 and the further compartments 16 (figure 20) located in the inner space of the bench 20 of the input/output module 3 can be used for the storage of trays 13. The chamber inside the bench 20 is also climate controlled.

As it is evident from the above description, the storage system according to the invention achieves a number of important advantages:
- first of all, the storage of histological samples is performed with a total assurance on the proper preservation of the samples,
- moreover, the storage system meets the requirement for a fully automated, fast and reliable transfer of blocks containing histological samples both in and out of the storage system,
- in addition, the storage system achieves high flexibility in terms of the possibility of interfacing it with different automatic and manual systems for handling histological samples,
- last but not least, there is the advantage of a total traceability of each histological sample, both within the storage system and in the steps wherein it is in transit in and out of the storage system, with the simultaneous possibility of totally excluding the intervention of operators on the samples, which radically removes the risk of errors in the processing of the samples themselves and in their association with respective identification data.

The aforementioned advantages are even more evident when it is considered that the system according to the invention is configured to be integrated into a fully automated anatomical pathology laboratory, wherein the storage system of the invention constitutes one of the different automated stations, connected with each other by means of equally automated transport systems and/or assisted by intelligent transport systems, such as for example autonomous mobile robots.

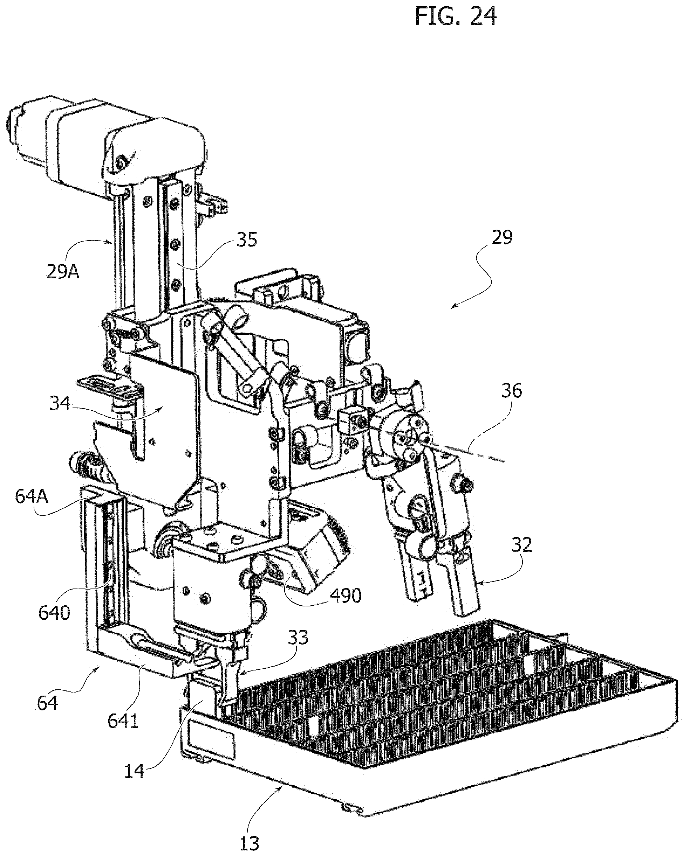

Figure 24 of the appended drawings shows a further perspective view of the operating head 29 of the manipulator device 26, which was illustrated above with reference to figures 7 and 12. Figure 24 refers to a variation comprising a cassette-detaching device 64 associated with the gripper 33. The gripper 33 has two jaws that are movable relatively to each other between a closed grasping position and an open release position. The cassette-detaching device 64 prevents that a cassette 14 grasped by the gripper 33 of the operating head 29 remains adherent to one or both jaws of the gripper 33, when the gripper 33 places the cassette 14 in a tray 13, due to the adhesiveness of the embedding material containing the histological sample associated with the cassette.

The cassette-detaching device 64 is carried by a support 64A rigidly connected to a main support structure 29A of the operating head 29. The support structure 29A is the structure carrying the rail 35 on which it is movable, along the vertical Z-direction, the structure 34 carrying the grippers 32 and 33, as already described above. The support structure 29A, carrying the rail 35, is movable in the Y-direction (figure 1) on the rail 30 (figure 6) of the manipulator device 26. As previously described, the rail 30 of the manipulator device 26 is in turn movable in the X-direction with respect to the fixed gantry structure 27 (figure 1).

As a result of the above described arrangement, the support 64A of the cassette-detaching device 64 is movable in the directions X and Y together with the support structure 29A of the operating head 29, while the grippers 32 and 33 are carried by the structure 34 movable in Z, along the rail 35, with respect to the support structure 29A.

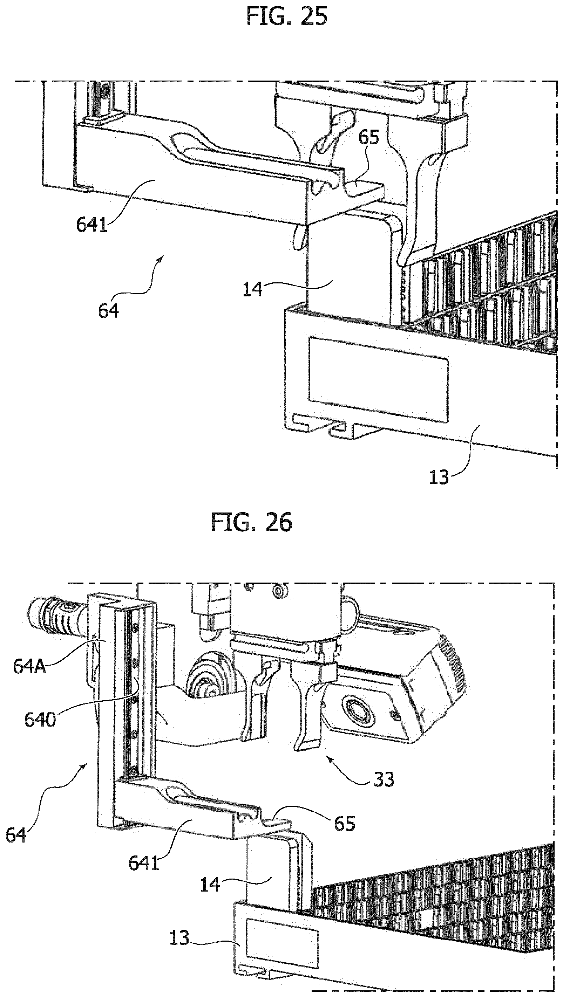

The cassette-detaching device 64 further comprises a vertical rail 640 carried by the support 64A, on which it is freely sliding mounted a block 641 protruding cantilevered from the rail 640 in a horizontal direction and ending with a striker element 65 (figures 25, 26), advantageously a spout protruding cantilevered from the end of the block 641, according to a horizontal direction orthogonal to the horizontal direction of the block 641.

The block 641 is free to slide on the rail 640 carried by the support 64A, but it tends to remain, due to its own weight, in a downward end stroke position, wherein it abuts against an end stroke surface (not illustrated) of the support 64A.

As it is visible in figures 24-26, the gripper 33 is vertically movable together with the structure 34 along an axis orthogonal to the striker spout 65. Therefore the spout 65, when the gripper 33 is moved vertically downward to a position where it can pick up or release a cassette, interposes itself between the jaws of the gripper 33, remaining above the grasped cassette (see figures 24, 25).

In the step illustrated in figure 24, wherein the gripper 33 must place a cassette 14 in a tray 13, the gripper inserts the cassette 14 in a corresponding location of the tray 13, after which the jaws of the gripper are enlarged and the gripper 33 is moved upward. If, in such a condition, the cassette 14 tends to remain adherent to one or both the jaws of the gripper 33, due to the adhesiveness of the embedding material, the cassette 14 is intercepted by the striker spout 65 during the upward movement of the gripper 33 (figure 25), allowing the gripper 33 to move away (figure 26), while the cassette 14 is forced to fall into its location in the tray 13. During this operation, the weight of the block 641 is sufficient to cause the detachment of the gripper 33 from the cassette 14, since the gripper is in a condition wherein the jaws do not exert a clamping force on the cassette.

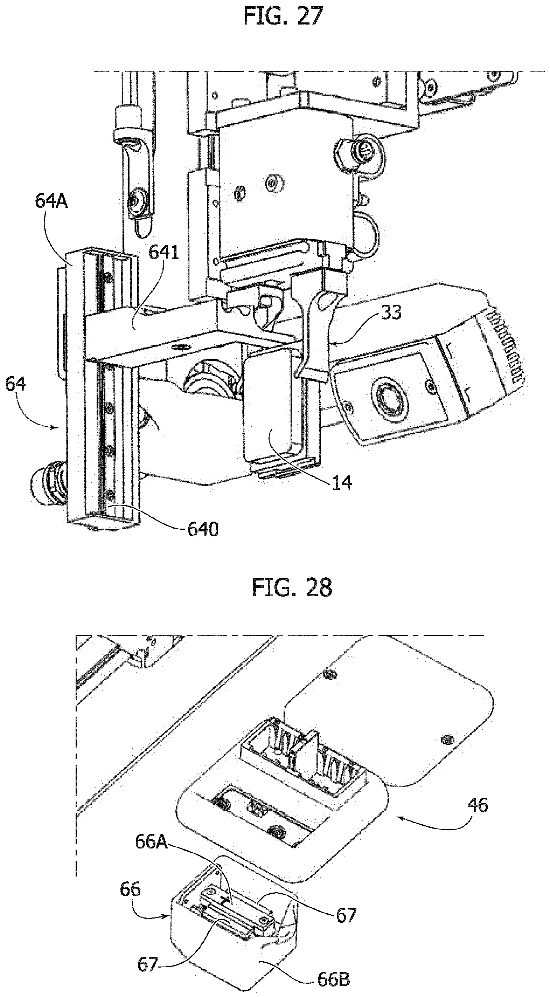

On the other hand, in case of an operation of picking up of a cassette 14 (figure 27), the jaws of the gripper 33 exert a clamping force on the cassette 14, so that the weight of the block 641 does not obstruct that operation. In this step, the block 641 passively follows the movement of the cassette 14 and the gripper 33, moving upward on its rail 640 and then remaining in such position during the handling movements of the cassette 14.

The weight of the block 641 is therefore chosen so that it is sufficient to hold the cassette 14 during an upward movement of the gripper 33, when what joins the cassette to the gripper is only the adhesiveness of the embedding material, but at the same time fails to counteract the movement of the cassette 14 when it is moved upward by the gripper 33 after being positively grasped by the gripper, that is while the jaws of the latter exert a clamping force.

It should be noted that the aforementioned cassette-detaching device is also likely to be used in other applications, in any case where a gripper of a manipulator device manipulates a workpiece having adhesive features, in order to ensure that when the gripper opens to release a previously grasped workpiece, the workpiece detaches from the gripper.

Therefore, a manipulator device having the following features constitutes an independent aspect and separated from the present invention:
C1. Manipulator device for manipulating workpieces, comprising a gripper movable in at least one vertical direction and having two jaws movable relatively to each other between a closed grasping position and an open release position,
   characterized in that:
   - it is associated with said gripper (33) a cassette-detaching device (64) configured to prevent that, when the gripper (33) releases a workpiece (14) that has been previously grasped by the gripper (33), the workpiece (14) remains adherent to one or both the jaws of the gripper (33) due to the adhesiveness of the workpiece (14),
   - said cassette-detaching device (64) has a striker element (65) configured to arrange itself between the two jaws of said gripper (33), above a workpiece (14) grasped by the gripper (33), so as to prevent an upward movement of the workpiece (14) when the gripper (33) is lifted after having released the workpiece (14), in the event that the workpiece (14) remains adherent to one or both the jaws of the gripper due to the adhesiveness of the workpiece (14).
C2. Manipulator device according to the feature C1, characterized in that:
   - the manipulator device comprises a main support (29A) in respect of which the gripper (33) is vertically movable,
   - said striker element (65) is carried by a block (641) freely sliding mounted on a vertical rail (640) carried by a support (64A) which is rigidly connected to said main support (29A),
   - the block (641) tends to remain, due to its own weight, in a downward end stroke position with respect to the support (64A), such that the striker element (65) performs the aforementioned function of obstructing the workpiece (14), when the gripper (33) is lifted after having released the workpiece (14), while the block (641) passively moves upward along the vertical rail (640) when a workpiece is lifted by said gripper (33) after having been positively grasped by the gripper (33).

Figure 28 is a perspective view of a detail of the upper level of the bench 20, in a variation of the invention wherein, next to the interface station 46, a cleaning station 66 is arranged for cleaning the jaws of the gripper 33 of the manipulator device 26. The cleaning station 66 comprises a support 66A arranged within an upwardly open housing 66B. The support 66A has two opposite faces bearing two cleaning felts 67. When it is necessary to remove foreign material (i.e. residual embedding material) from the jaws of the gripper 33, the latter is brought, by actuating the X, Y and Z movements of the manipulator device 26, at the cleaning station 66 and controlled movements (vertical and/or horizontal) are imparted to the gripper 33, keeping the inner surfaces of the jaws of the gripper 33 in rubbing contact on the felts 67. The entire cleaning cycle can obviously be automatically activated according to a specific program implemented through the electronic controller E.

Naturally, without prejudice to the principle of the invention, the construction details and the embodiments may vary widely with respect to what is described and illustrated purely by way of example, without thereby departing from the scope of the present invention, as defined in the appended claims.

## Claims

1. A system (1) for the storage of blocks (B) of embedding material containing histological samples, comprising:
- a plurality of cassettes (14), each configured to carry a block (B) of embedding material containing a histological material sample, wherein each cassette (14) bears an identification element (48) which identifies the histological sample associated with the cassette (14),
- a storage cell (2), including a plurality of compartments (12) configured to receive cassettes (14) carrying respective blocks (B) with histological samples,
- an input/output module (3), for the input of cassettes (14) carrying blocks (B) with histological samples into said storage cell (2) and for the output of cassettes (14) carrying blocks (B) with histological samples from said storage cell (2),
said system being **characterized in that**:
- the storage cell (2) has a stationary structure,
- each compartment (12) of the storage cell (2) is configured to receive a tray (13) carrying a plurality of cassettes (14) with associated respective blocks (B) including histological samples, each tray (13) having an identification element which identifies the tray (13),
and **in that** the system comprises:
- at least one manipulator device (26, 49) for transferring trays (13), carrying said cassettes (14) with their respective blocks (B), between the input/output module (3) and the compartments (12) of the storage cell (2),
- one or more detecting devices (490, 530), configured to detect the identification element of each tray (13) and the identification element (48) of each cassette (14) carrying a respective block (B) containing a histological sample,
- an electronic controller (E) configured to:
- receive from said one or more detecting devices (490, 530) data identifying each cassette (14) and data identifying each tray (13),
- control said at least one manipulator device (26, 49) to transfer trays (13) between the input/output module (3) and the compartments (12) of the storage cell (2), and
- store the position wherein each tray (13) is placed in the storage cell (2) and the position of each cassette (14) in each tray (13),
such that said electronic controller (E) is able to locate and transfer, by means of said at least one manipulator device (26, 49), an identified tray (13) from the respective compartment (12) in the storage cell (2) to the input/output module (3), when it is necessary to bring out of the storage cell (2) an identified histological sample, associated with an identified cassette (14) carried by an identified tray (13),
said input/output module (3) including a plurality of input stations (24), wherein trays (13) are arranged intended to be transferred to the storage cell (2) and each carrying a plurality of cassettes (14) with the associated blocks (B) containing histological samples, and at least one output station (60),
said input stations (24) including:
- at least a first input station (24),
- at least an arrival/departure station (25) which is interfaced with said at least a first input station (24) and which is part of an automated transport system for transporting cassettes (14) carrying respective blocks (B) containing histological samples, said automated transport system being part of an automated processing line of histological samples,
- at least a second input station (24) which is interfaced with a location (54) for the manual placement of cassettes (14) carrying respective blocks (B) containing histological samples.

2. Storage system according to claim 1, **characterized in that** said at least one manipulator device comprises:
- a first manipulator device (26), associated with said input/output module (3), and
- a second manipulator device (49), associated with said storage cell (2).

3. Storage system according to claim 2, **characterized in that**:
- said first input station (24) is configured to receive thereon a tray (13) in a waiting position wherein it can be filled with cassettes (14) carrying respective blocks (B) containing histological samples,
- adjacent to said first input station (24), it is provided an interface station (46) between the first input station (24) and said at least an arrival/departure station (25) of said automated transport system,
- said at least an arrival/departure station (25) of the automated transport system is configured to receive cassettes (14) carried within a transport container (42),
- said interface station (46) comprises a holder (45) having one or more housings (44) configured to removably receive respective transport containers (42) each carrying a plurality of cassettes (14),
- said first manipulator device (26) comprises an operating head (29) movable above said input/output module (3) and carrying a first gripper (32) configured to grasp a transport container (42) and a second gripper (33) configured to grasp a single cassette (14) within said transport container (42),
- said electronic controller (E) being configured to control said first manipulator device (26) to:
- transfer, by means of said first gripper (32), a transport container (42) filled with cassettes (14), after it has arrived at said at least an arrival/departure station (25), to a housing (44) of said holder (45) in the interface station (46),
- transfer, by means of said second gripper (33), one after the other all the cassettes (14), arranged within a transport container (42) which has been placed in said housing (44) of said holder (45) in the interface station (46), within the tray (13) which is in the waiting position in said first input station (24),
- transfer, by means of said first gripper (32), an empty transport container (42) from said housing (44) of the holder (45) of said interface station (46) to said arrival/departure station (25),
- wherein said one or more detecting devices (490, 530) include a reader device (490) carried by said operating head (29) of the first manipulator device (26), arranged in such a position as to read the identification element (48) of a cassette (14), when the cassette (14) is grasped by said second gripper (33) of the first manipulator device (26),
- in such a way that said electronic controller (E) can store data related to each cassette (14) and to the position of the cassette (14) in the tray (13) located at the first input station (24), as the first manipulator device (26) gradually places the cassettes (14) in the tray (13).

4. Storage system according to claim 2, **characterized in that** said second manipulator device (49) comprises an operating head movable in the storage cell (2) and carrying a support (50) configured to pick up a tray (13) located in said first input station (24) and to place it in a compartment (12) of the storage cell (2),
said one or more detecting devices (490, 530) including a detecting device (530) associated with said support (50) of the second manipulator device (49), configured to detect the identification element of the tray (13) being transported by the second manipulator device (49),
whereby said electronic controller (E) is able to store identification data of the tray (13) and the compartment (12) of the storage cell (2) wherein the tray (13) is placed.

5. Storage system according to claim 1, **characterized in that** said output station (60) comprises a bench (20) of said input/output module (3) defining a compartment (61) configured to receive:
- a drawer structure (62) comprising a plurality of vertically overlapping and spaced apart compartments, configured to receive trays (13), said drawer structure (62) being provided with a manually operated carriage,
or:
- an autonomous mobile robot having a superstructure including a plurality of vertically overlapping and spaced apart planes, configured to hold trays (13).

6. Storage system according to claim 2, **characterized in that** said at least one second input station (24) which is interfaced with a location (54) for the manual placement of cassettes (14) comprises one or more stations configured to receive cassettes (14) already arranged in trays of predetermined sizes suitable for the compartments (12) of the storage cell (2) and one or more further stations arranged to receive cassettes (14) within trays (13') of different sizes with respect to said predetermined sizes,
said electronic controller (E) being configured to control said first manipulator device (26) to transfer cassettes (14), one at a time, between said trays (13') of different sizes and said trays (13) of predetermined sizes, suitable for the compartments of the storage cell (2).

7. Storage system according to claim 1, **characterized in that** said electronic controller (E) is configured to control said at least one manipulator device (26, 49) in order to carry each cassette (14), before the cassette (14) is placed in a tray (13) in said input/output module (3), close to a camera or video camera arranged to detect image data related to the histological sample associated with the cassette (14), said electronic controller (E) being further configured to store said image data related to the histological sample of each cassette (14) in a memory associated therewith.

8. Storage system according to claim 3, **characterized in that**:
- said second gripper (33) of the first manipulator device (26) comprises two jaws movable relatively to each other between a closed grasping position and an open release position,
- it is associated with said second gripper (33) a cassette-detaching device (64) configured to prevent that, when the second gripper (33) releases a cassette (14) in a tray (13) which is in a waiting position in said first input station (24), the cassette (14) remains adherent to one or both the jaws of the second gripper (33) due to the adhesiveness of the embedding material associated with the cassette (14),
- said cassette-detaching device (64) has a striker element (65) configured to arrange itself between the two jaws of said second gripper (33), above a cassette (14) grasped by the second gripper (33), so as to prevent an upward movement of the cassette (14) when the second gripper (33) is lifted after having released the cassette (14) in a tray (13), in the event that the cassette (14) remains adherent to one or both the jaws of the second gripper (33) due to the adhesiveness of the embedding material associated with the cassette (14).

9. Storage system according to claim 8, **characterized in that**:
- said striker element (65) is carried by a block (641) freely sliding mounted on a vertical rail (640) carried by a support (64A) which is rigidly connected to a main support structure (29A) of the operating head (29),
- said second gripper (33) is vertically movable with respect to said support (64A) on which said block (641) of the cassette-detaching device (64) is mounted, and
- the block (641) tends to remain, due to its own weight, in a downward end stroke position with respect to the support (64A), such that the striker element (65) performs the aforementioned function of obstructing the cassette (14), when the second gripper (33) is lifted after having released the cassette (14) in a tray (13), while the block (641) passively moves upward along the vertical rail (640) when a cassette (14) is lifted by said second gripper (33) after having been positively grasped by the second gripper (33).

10. Storage system according to claim 3, **characterized in that** it comprises a cleaning station (66) for cleaning the jaws of the second gripper (33) of the first manipulator device (26), comprising a support (66A) having two opposite faces bearing two cleaning felts (67), on which the jaws of the second gripper (33) can be kept in rubbing contact, through controlled movements of the first manipulator device (26), to remove foreign material from the jaws of the second gripper (33).

11. A process for the storage of blocks (B) of embedding material containing histological samples, said process comprising the following steps:
- preparing a plurality of cassettes (14), each configured to carry a block (B) of embedding material containing a histological material sample, wherein each cassette (14) bears an identification element (48) which identifies the histological sample associated with the cassette (14),
- preparing a storage cell (2), including a plurality of compartments (12) configured to receive cassettes (14) carrying respective blocks (B) with histological samples,
- preparing an input/output module (3), for the input of cassettes (14) carrying blocks (B) with histological samples into said storage cell (2) and for the output of cassettes (14) carrying blocks (B) with histological samples from said storage cell (2),
said process being **characterized in that**:
- the storage cell (2) has a stationary structure,
- each compartment (12) of the storage cell (2) is configured to receive a tray (13) carrying a plurality of cassettes (14) with associated respective blocks (B) including histological samples, each tray (13) having an identification element which identifies the tray (13),
- the trays carrying said cassettes (14) with their respective blocks (B) are transferred between the input/output module (3) and the compartments (12) of the storage cell (2) by at least one manipulator device (26, 49),
- one or more detecting devices (490, 530) are arranged, configured to detect the identification element of each tray (13) and the identification element (48) of each cassette (14) carrying a respective block (B) containing a histological sample,
- an electronic controller (E) receives, from said one or more detecting devices (490, 530), data identifying each cassette (14) and data identifying each tray (13),
- by means of the electronic controller (E), said at least one manipulator device (26, 49) is controlled to transfer trays (13) between the input/output module (3) and the compartments (12) of the storage cell (2), and
- the position wherein each tray (13) is placed in the storage cell (2) and the position of each cassette (14) in each tray (13) is stored,
such that said electronic controller (E) is able to locate and transfer, by means of said at least one manipulator device (26, 49), an identified tray (13) from the respective compartment (12) in the storage cell (2) to the input/output module (3), when it is necessary to bring out of the storage cell (2) an identified histological sample, associated with an identified cassette (14) carried by an identified tray (13),
said process further comprising the steps of:
- providing said input/output module (3) with a plurality of input stations (24), wherein trays (13) are arranged intended to be transferred to the storage cell (2) and each carrying a plurality of cassettes (14) with the associated blocks (B) containing histological samples, and with at least one output station (60),
- interfacing at least a first input station (24) with at least an arrival/departure station (25) of an automated transport system for transporting cassettes (14) carrying respective blocks (B) containing histological samples, said automated transport system being part of an automated processing line of histological samples, and
- interfacing at least a second input station (24) with a location (54) for the manual placement of cassettes (14) carrying respective blocks (B) containing histological samples.

12. Storage process according to claim 11, **characterized by** further comprising the following steps:
- receiving, at said first input station (24), a tray (13) in a waiting position wherein it can be filled with cassettes (14) carrying respective blocks (B) containing histological samples,
- arranging, adjacent to said first input station (24), an interface station (46) between the first input station (24) and said at least an arrival/departure station (25) of said automated transport system,
- receiving, at said at least an arrival/departure station (25) of the automated transport system, cassettes (14) carried within a transport container (42),
- arranging said interface station (46) with a holder (45) having one or more housings (44) configured to removably receive respective transport containers (42) each carrying a plurality of cassettes (14),
- transferring, by means of a first gripper (32) of a first manipulator device (26) associated with said input/output module (3), a transport container (42) carrying a plurality of cassettes (14), after it has arrived at said at least an arrival/departure station (25), to a housing (44) of said holder (45) in the interface station (46),
- transferring, by means of a second gripper (33) of said first manipulator device (26), one after the other all the cassettes (14) arranged within a transport container (42) which has been placed in said housing (44) of said holder (45) in the interface station (46), within the tray (13) which is in the waiting position in said first input station (24),
- transferring, by means of said first gripper (32) of said first manipulator device (26), an empty transport container (42) from said housing (44) of said holder (45) in the interface station (46) to said at least an arrival/departure station (25),
- detecting, by means of a reader device (490) carried by an operating head (29) of the first manipulator device (26), the identification element (48) of a cassette (14), when the cassette (14) is grasped by said second gripper (33) of the first manipulator device (26), and
- storing data related to each cassette (14) and to the position of the cassette (14) in the tray (13) located at the first input station (24), as the first manipulator device (26) gradually places the cassettes (14) in the tray (13).

13. Storage process according to claim 12, **characterized by** further comprising the following steps:
- arranging a second manipulator device (49) associated with said storage cell (2) and comprising an operating head movable in the storage cell (2) and carrying a support (50) configured to take a tray (13) thereon,
- picking up, by means of said support (50) of the movable operating head of the second manipulator device (49), a tray (13) located in said first input station (24) and placing it in a compartment (12) of the storage cell (2),
- detecting, by means of a detecting device (530) associated with said support (50) of the second manipulator device (49), the identification element of the tray (13) being transported by the second manipulator device (49), and
- storing identification data of the tray (13) and the compartment (12) of the storage cell (2) wherein the tray (13) is placed.

14. Storage process according to claim 13, **characterized in that** it comprises the following steps:
- receiving data, in said electronic controller (E), identifying a cassette (14) carrying a block (B) containing an identified histological sample which has to be brought out of the storage cell (2),
- identifying the tray (13) containing said identified cassette (14) and the compartment (12) of the storage cell (2) containing said tray (13), and
- transferring the tray (13), by means of said second manipulator device (49), from the respective compartment (12) in the storage cell (2) to said output station (60) of the input/output module (3).

15. Storage process according to claim 11, **characterized by** further comprising the following steps:
- detecting, by means of a camera or video camera, image data related to the histological sample associated with each cassette (14), before the cassette (14) is placed in a tray (13) in said input/output module (3), and
- storing said image data related to the histological sample of each cassette (14).
